# EUROPÄISCHE PATENTSCHRIFT

(11) **EP 3 850 911 B1**
(45) Veröffentlichungstag und Bekanntmachung des Hinweises auf die Patenterteilung: **30.08.2023**
(21) Anmeldenummer: 19762149.3
(22) Anmeldetag: 02.09.2019
(51) Int. Cl.: H05B 45/58

(54) **LED-LEUCHTVORRICHTUNG MIT FEHLERDETEKTION UND KRAFTFAHRZEUG**
LED LIGHTING DEVICE WITH FAULT DETECTION, AND MOTOR VEHICLE
DISPOSITIF D'ÉCLAIRAGE À DEL COMPRENANT UNE DÉTECTION D'ERREURS ET VÉHICULE À MOTEUR

(30) Priorität: 11.09.2018 DE 102018122067
(43) Veröffentlichungstag der Anmeldung: 21.07.2021
(73) Patentinhaber: HELLA GMBH & CO. KGAA, 59552 Lippstadt (DE)
(72) Erfinder: SEBASTIAN, Helmut, 33104 Paderborn (DE)
(86) Internationale Anmeldenummer: PCT/EP2019/073325
(87) Internationale Veröffentlichungsnummer: WO 2020/053012

(56) Entgegenhaltungen:
- JP-A- 2010 278 039
- US-A1- 2010 264 828

## Beschreibung

Die vorliegende Erfindung betrifft eine LED-Leuchtvorrichtung, insbesondere für ein Kraftfahrzeug, aufweisend eine LED-Leuchtmittelreihenschaltung mit einem ersten LED-Leuchtmittel und einem mit dem ersten LED-Leuchtmittel über eine Leuchtmittelkoppelstelle gekoppelten zweiten LED-Leuchtmittel, eine Anode, eine Kathode, eine Treiberelektronik zum Verbinden mit der Anode und der Kathode zum Betreiben der LED-Leuchtmittelreihenschaltung und eine Detektionsvorrichtung zum Detektieren eines Defekts des ersten LED-Leuchtmittels und des zweiten LED-Leuchtmittels. Ferner betrifft die Erfindung ein Kraftfahrzeug mit einer LED-Leuchtvorrichtung.

LED-Leuchtvorrichtungen weisen ein oder mehrere LED-Leuchtmittel auf, wobei ein LED-Leuchtmittel ein oder zwei, insbesondere in Reihe geschaltete, LED-Leuchtelemente aufweist. LED-Leuchtelemente werden umgangssprachlich auch als Leuchtdioden bezeichnet. Die LED-Leuchtmittel sind üblicherweise in einer Reihenschaltung miteinander verschaltet. LED-Leuchtvorrichtungen haben gegenüber konventionellen, glühwendelbasierten Leuchtvorrichtungen diverse Vorteile. Ein besonderer Vorteil ist ein wesentlich höherer Wirkungsgrad, sodass zum Erreichen derselben Lichtintensität eine LED-Leuchtvorrichtung einen wesentlich geringeren Stromverbrauch als eine konventionelle Leuchtvorrichtung aufweist. Dies liegt insbesondere daran, dass bei der LED-Leuchtvorrichtung weniger elektrische Energie in Verlustwärme umgewandelt wird. Ein weiterer Vorteil ist die hohe Lebensdauer. Während konventionelle Leuchtvorrichtungen aufgrund der hohen Betriebstemperaturen einer sehr hohen thermischen Belastung ausgesetzt sind und daher oftmals nur wenige hundert Betriebsstunden aufweisen, sind Lebenszeiten von über 100.000 Betriebsstunden bei LED-Leuchtvorrichtungen keine Besonderheit mehr. Zudem verkürzt sich die Lebensdauer von konventionellen Leuchtvorrichtungen bei intermittierendem Betrieb wesentlich stärker als bei LED-Leuchtvorrichtungen. Aus diesem Grund sind LED-Leuchtvorrichtungen zuverlässiger und somit wartungsärmer als konventionelle Leuchtvorrichtungen. Schließlich sind die Herstellungskosten von LED-Leuchtvorrichtungen gegenüber konventionellen Leuchtmitteln aufgrund verbesserter Herstellungsverfahren sowie wachsender Stückzahlen drastisch gesunken.

Wegen der vielen Vorteile gegenüber konventionellen Leuchtmitteln wächst der Einsatz von LED-Leuchtvorrichtungen, insbesondere mit LED-Hochleistungsleuchtmitteln, fortschreitend, während die Verbreitung konventioneller Leuchtvorrichtungen stark rückläufig ist. Beispielsweise in der Automobilindustrie werden LED-Leuchtvorrichtungen als Scheinwerfer sowie sonstige Beleuchtungsvorrichtungen verwendet.

Insbesondere aufgrund gesetzlicher Vorschriften sowie besonderer Vorgaben von Automobilherstellern müssen LED-Leuchtvorrichtungen oftmals eine Fehlererkennungsvorrichtung zur Erkennung von Fehlern der LED-Leuchtmittel aufweisen. Mittels derartiger Fehlererkennungsvorrichtungen sind Unterbrechungen der Reihenschaltung der LED-Leuchtmittel zuverlässig detektierbar.

Ein Nachteil bekannter Leuchtvorrichtungen ist, dass eine Fehlererkennung bei einem Kurzschluss eines LED-Leuchtmittels bzw. eines LED-Leuchtelements nicht zuverlässig oder nur sehr aufwendig gewährleistbar ist. Das Risiko eines Kurzschlusses eines LED-Leuchtmittels ist insbesondere aufgrund spezieller LED-Aufbautechniken sowie einer aus Konstruktionsgründen vorherrschenden Ausreizung der LED-Leuchtmittel bis an die Leistungsgrenze, um aus einem möglichst günstigen LED-Leuchtmittel eine besonders hohe Lichtausbeute zu erzielen, erhöht. Derartige Kurzschlüsse sind mit steigender Anzahl an in Reihe geschalteter LED-Leuchtmittel schwerer zu detektieren, da eine durch den Kurzschluss bewirkte Veränderung eines Spannungsverlaufs nur sehr gering ausfällt. Zudem sind Spannungsverläufe in der Reihenschaltung von weiteren Parametern, wie beispielsweise einer Umgebungstemperatur sowie einer Fertigungstoleranz des LED-Leuchtmittels, abhängig. Dies hat zur Folge, dass mittels bekannter Fehlererkennungsvorrichtungen oftmals nur der Kurzschluss von mehreren LED-Leuchtmitteln diagnostizierbar ist.

Überdies ist eine messtechnische Einzelüberwachung der LED-Leuchtmittel aufgrund der hohen Anzahl an Verkabelungen sowie Schnittstellen zu einer Treiberelektronik der LED-Leuchtvorrichtung verhältnismäßig teuer und daher für eine Serienfertigung nur bedingt geeignet.

JP 2010 278039 A betrifft eine LED-Leuchtvorrichtung mit mehreren in Reihe geschalteter LED-Leuchtmittel, einer Anode, einer Kathode, einer Treiberelektronik und einer Detektionsvorrichtung, welche zum Abgreifen einer Spannung in der Mitte der Reihe der LED-Leuchtmittel ausgebildet ist und somit eine Messbrückenschaltung bildet. US 2010/264828 A1 offenbart eine LED-Leuchtvorrichtung, bei welcher Spannungen unterschiedlicher Stellen einer LED-Reihenschaltung mittels Komparatoren vergleichbar sind.

Es ist daher Aufgabe der vorliegenden Erfindung, die voranstehend beschriebenen Nachteile bei einer LED-Leuchtvorrichtung sowie einem Kraftfahrzeug zu beheben oder zumindest teilweise zu beheben. Insbesondere ist es Aufgabe der vorliegenden Erfindung, eine LED-Leuchtvorrichtung und ein Kraftfahrzeug zu schaffen, die ausgebildet sind, einen Defekt eines LED-Leuchtmittels auf eine einfache sowie kostengünstige Art und Weise zu erkennen.

Voranstehende Aufgabe wird durch die Patentansprüche gelöst. Demnach wird die Aufgabe durch eine LED-Leuchtvorrichtung mit den Merkmalen des unabhängigen Anspruchs 1 sowie durch ein Kraftfahrzeug mit den Merkmalen des nebengeordneten Anspruchs 9 +& gelöst. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen LED-Leuchtvorrichtung beschrieben sind, selbstverständlich auch im Zusammenhang mit dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch eine LED-Leuchtvorrichtung gelöst. Die LED-Leuchtvorrichtung weist eine LED-Leuchtmittelreihenschaltung mit einem ersten LED-Leuchtmittel und einem mit dem ersten LED-Leuchtmittel über eine Leuchtmittelkoppelstelle gekoppelten zweiten LED-Leuchtmittel, eine Anode, eine Kathode, eine Treiberelektronik zum Verbinden mit der Anode und der Kathode zum Betreiben der LED-Leuchtmittelreihenschaltung und eine Detektionsvorrichtung zum Detektieren eines Defekts des ersten LED-Leuchtmittels und des zweiten LED-Leuchtmittels auf. Erfindungsgemäß bildet die Detektionsvorrichtung zusammen mit dem ersten LED-Leuchtmittel und dem zweiten LED-Leuchtmittel eine erste Messbrückenschaltung.

Die LED-Leuchtmittelreihenschaltung weist mehrere LED-Leuchtmittel auf, welche miteinander in Reihe geschaltet sind. Die LED-Leuchtmittelreihenschaltung weist jedenfalls mindestens das erste LED-Leuchtmittel und das zweite LED-Leuchtmittel auf. Zusätzlich kann vorgesehen sein, dass die LED-Leuchtmittelreihenschaltung weitere LED-Leuchtmittel aufweist, welche ebenfalls in Reihe mit dem ersten LED-Leuchtmittel und dem zweiten LED-Leuchtmittel geschaltet sind. Das erste LED-Leuchtmittel ist mit dem zweiten LED-Leuchtmittel über die Leuchtmittelkoppelstelle elektrisch gekoppelt. Als Leuchtmittelkoppelstelle kann erfindungsgemäß als ein Bereich bezeichnet werden, welcher im Stromfluss zwischen dem ersten LED-Leuchtmittel und dem zweiten LED-Leuchtmittel ausgebildet ist. Vorzugsweise sind die Anode und/oder die Kathode direkt an der LED-Leuchtmittelreihenschaltung, insbesondere an Endbereichen der LED-Leuchtmittelreihenschaltung, ausgebildet. Unter einer elektrischen Kopplung wird im Rahmen der Erfindung insbesondere eine direkte elektrische Kopplung, beispielsweise über eine elektrische Leitung oder eine direkte elektrische Anbindung der jeweiligen elektronischen Bauteile, verstanden. Eine elektrische Kopplung zweier elektronischer Bauteile kann erfindungsgemäß auch mittels einer Zwischenschaltung eines weiteren elektronischen Bauelements, wie beispielsweise eines Widerstands, einer Diode oder dergleichen, erfolgen.

Unter einem LED-Leuchtmittel wird im Rahmen der Erfindung ein Leuchtmittel verstanden, welches mindestens ein und höchstens zwei LED-Leuchtelemente, wie beispielsweise Leuchtdioden, aufweist. Im einfachsten Fall entspricht ein LED-Leuchtmittel demnach einem LED-Leuchtelement. Wenn das LED-Leuchtmittel zwei LED-Leuchtelemente aufweist, sind die LED-Leuchtelemente vorzugsweise miteinander in Reihe geschaltet. Eine Parallelschaltung der beiden LED-Leuchtelemente kann erfindungsgemäß ebenfalls vorgesehen sein.

Die Treiberelektronik ist zum Betreiben der LED-Leuchtvorrichtung ausgebildet. Hierzu zählt insbesondere das Bereitstellen eines definierten elektrischen Stroms aus einer Stromquelle, wie beispielsweise einer Autobatterie oder dergleichen. Zum Betreiben der LED-Leuchtvorrichtung ist die Treiberelektronik mit der Anode und der Kathode elektrisch gekoppelt.

Die Detektionsvorrichtung der LED-Leuchtvorrichtung ist ausgebildet, im Zusammenspiel mit dem ersten LED-Leuchtmittel und dem zweiten LED-Leuchtmittel einen Defekt des ersten LED-Leuchtmittels und einen Defekt des zweiten LED-Leuchtmittels zu detektieren. Demnach ist die Detektionsvorrichtung ausgebildet, einen Kurzschluss des ersten LED-Leuchtmittels zu detektieren. Ebenso ist die Detektionsvorrichtung ausgebildet, einen Kurzschluss des zweiten LED-Leuchtmittels zu detektieren. Vorzugsweise ist die Detektionsvorrichtung zum Detektieren eines Defekts jedes LED-Leuchtmittels der LED-Leuchtmittelreihenschaltung ausgebildet.

Zum Detektieren eines Defekts des ersten LED-Leuchtmittels und des zweiten LED-Leuchtmittels ist die Detektionsvorrichtung ausgebildet, zusammen mit dem ersten LED-Leuchtmittel und dem zweiten LED-Leuchtmittel eine erste Messbrückenschaltung zu bilden. Die Messbrückenschaltung kann beispielsweise gemäß einer Wheatstone'schen Brückenschaltung ausgebildet sein. Ein Kurzschluss oder eine Unterbrechung des ersten LED-Leuchtmittels oder des zweiten LED-Leuchtmittels bewirkt eine Verstimmung der Messbrückenschaltung, welche mit einfachen Mitteln detektierbar ist. Die Verstimmung der Messbrückenschaltung ist wesentlich stärker ausgeprägt und somit deutlich einfacher detektierbar als eine Spannungsveränderung einer herkömmlichen LED-Reihenschaltung bei einem Kurzschluss eines LED-Leuchtmittels. Ein Detektionsergebnis, wie beispielsweise die Verstimmung der Messbrückenschaltung, das Vorhandensein eines Defekts eines LED-Leuchtmittels, insbesondere als binäre Information, oder dergleichen, ist mit einfachen Mitteln und an die Treiberelektronik übermittelbar.

Eine erfindungsgemäße LED-Leuchtvorrichtung hat gegenüber herkömmlichen LED-Leuchtvorrichtungen den Vorteil, dass mit einfachen Mitteln sowie auf eine kostengünstige Art und Weise ein Defekt, insbesondere ein Kurzschluss, eines LED-Leuchtmittels der LED-Leuchtvorrichtung zuverlässig detektierbar ist. Mittels der Messbrückenschaltung bewirken bereits kleine Defekte, wie beispielsweise ein Kurzschluss eines LED-Leuchtmittels, eine große Verstimmung, welche mit relativ geringem Aufwand, insbesondere mittels einer Signalverarbeitungsvorrichtung, detektierbar ist. Eine teure Messelektronik ist somit entbehrlich. Ferner sind keine aufwendigen Zusatzleitungen zwischen den LED-Leuchtmitteln und der Treiberelektronik erforderlich. Überdies sind für die LED-Leuchtmittel keine separaten analogen Messkanäle an der Treiberelektronik vonnöten, sodass die Herstellungskosten der erfindungsgemäßen LED-Leuchtvorrichtung im Vergleich zu herkömmlichen LED-Leuchtvorrichtungen wesentlich geringer sind.

Gemäß der Erfindung ist vorgesehen, dass die Detektionsvorrichtung einen ersten Widerstand und einen zweiten Widerstand aufweist, wobei der erste Widerstand und der zweite Widerstand miteinander in Reihe geschaltet sind und zwischen sich eine gemeinsame Widerstandkoppelstelle ausbilden, wobei der erste Widerstand und der zweite Widerstand denselben ohmschen Widerstand aufweisen, wobei die Detektionsvorrichtung einen ersten Transistor und einen zweiten Transistor aufweist, wobei eine erste Basis des ersten Transistors und eine zweite Basis des zweiten Transistors eine gemeinsame Basiskoppelstelle bilden, und wobei die Basiskoppelstelle über einen dritten Widerstand mit der Widerstandkoppelstelle elektrisch gekoppelt ist. Vorzugsweise sind der ohmsche Widerstand des ersten Widerstands sowie des zweiten Widerstands größer, insbesondere mindestens 50% größer, als ein ohmscher Widerstand des ersten LED-Leuchtmittels sowie des zweiten LED-Leuchtmittels. Auf diese Weise ist eine Belastung der Treiberelektronik durch die Messelektronik reduzierbar. Vorzugsweise entspricht ein Widerstandsverhältnis des ersten Widerstands und dem zweiten Widerstand einem Widerstandsverhältnis des ersten LED-Leuchtmittels und des zweiten LED-Leuchtmittels. Somit ist eine Zuverlässigkeit der Messbrückenschaltung verbesserbar. Unter einem Widerstand wird im Rahmen der Erfindung ein elektronisches Bauteil verstanden, welches einen ohmschen Widerstand aufweist. Dies ist vorzugsweise ein als Widerstand bezeichnetes elektronisches Bauteil, kann aber auch als ein anderes elektronisches Bauteil mit einem ohmschen Widerstand, wie beispielsweise eine LED gleicher Baureihe, ein elektrischer Verbraucher oder dergleichen, ausgebildet sein. Ein erster Widerstand, ein zweiter Widerstand, ein erster Transistor und ein zweiter Transistor haben den Vorteil, dass diese kostengünstig sowie leicht verfügbar und zum Bilden der Messbrückenschaltung besonders geeignet sind. Hierdurch ist mit einfachen Mitteln sowie auf eine kostengünstige Art und Weise eine besonders zuverlässige Messbrückenschaltung realisierbar. Somit ist die Detektierbarkeit eines defekten LED-Leuchtmittels verbessert.

Es ist erfindungsgemäß bevorzugt, dass ein erster Emitter des ersten Transistors mit einem zweiten Emitter des zweiten Transistors und der Leuchtmittelkoppelstelle elektrisch gekoppelt ist. Der erste Transistor ist demnach vorzugsweise als NPN-Transistor und der zweite Transistor ist vorzugsweise als PNP Transistor ausgebildet. Hierdurch ist mit einfachen Mitteln sowie auf eine kostengünstige Art und Weise eine besonders zuverlässige Messbrückenschaltung realisierbar. Somit ist die Detektierbarkeit eines defekten LED-Leuchtmittels verbessert.

Weiter bevorzugt sind ein erster Kollektor des erstens Transistors und ein zweiter Kollektor des zweiten Transistors mit einer Signalverarbeitungsvorrichtung der LED-Leuchtvorrichtung elektrisch gekoppelt. Die Signalverarbeitungsvorrichtung ist ausgebildet, eine, insbesondere durch einen Kurzschluss des ersten LED-Leuchtmittels bzw. des zweiten LED-Leuchtmittels verursachte, Verstimmung der Messbrückenschaltung zu detektieren und an die Treiberelektronik zu übermitteln. Mittels einer derartigen Verschaltung ist mit einfachen Mitteln sowie auf eine kostengünstige Art und Weise eine besonders zuverlässige Messbrückenschaltung realisierbar. Somit ist die Detektierbarkeit eines defekten LED-Leuchtmittels verbessert.

In einer besonders bevorzugten Ausgestaltung der Erfindung kann bei einer LED-Leuchtvorrichtung vorgesehen sein, dass die Signalverarbeitungsvorrichtung einen dritten Transistor aufweist, wobei ein dritter Emitter des dritten Transistors mit der Anode bzw. einer positiven Spannungsversorgung der LEDs elektrisch gekoppelt ist, wobei eine dritte Basis des dritten Transistors über einen vierten Widerstand mit dem ersten Kollektor elektrisch gekoppelt ist, wobei ein dritter Kollektor des dritten Transistors über eine erste Diode und einen fünften Widerstand mit der Kathode bzw. einer negativen Spannungsversorgung der LEDs elektrisch gekoppelt ist, und wobei der zweite Kollektor des zweiten Transistors über eine zweite Diode mit einem Bereich zwischen der ersten Diode und dem fünften Widerstand elektrisch gekoppelt ist. Mittels einer derartigen Signalverarbeitungsvorrichtung ist die Detektierbarkeit eines defekten LED-Leuchtmittels mit einfachen Mitteln sowie auf eine kostengünstige Art und Weise verbessert.

Vorzugsweise ist die Treiberelektronik ausgebildet, einen Betriebszustand der LED-Leuchtmittelreihenschaltung in Abhängigkeit eines von der Signalverarbeitungsvorrichtung ausgewerteten Signals zu steuern. Weiter bevorzugt sind die Treiberelektronik und/oder die Signalverarbeitungsvorrichtung ausgebildet, einen detektierten Fehler eines LED-Leuchtmittels anzuzeigen. Die Treiberelektronik ist insbesondere Ausgebildet, bei einem detektierten Defekt eines LED-Leuchtmittels einen Notbetriebszustand der LED-Leuchtmittelreihenschaltung einzuschalten, um Defekte weiterer LED-Leuchtmittel, insbesondere aufgrund von Überspannung, zu vermeiden. Dies hat den Vorteil, dass mit einfachen Mitteln sowie auf eine kostengünstige Art und Weise ein einstweiliger Betrieb der LED-Leuchtvorrichtung auch bei defekten LED-Leuchtmitteln bis zu einer Reparatur sichergestellt ist. Gemäß einer bevorzugten Ausführungsform der Erfindung weist die LED-Leuchtvorrichtung ein drittes LED-Leuchtmittel und einen sechsten Widerstand auf, wobei das dritte LED-Leuchtmittel zusammen mit dem zweiten LED-Leuchtmittel, dem zweiten Widerstand und dem sechsten Widerstand eine zweite Messbrückenschaltung bildet. Das dritte LED-Leuchtmittel ist vorzugsweise in der LED-Leuchtmittelreihenschaltung direkt hinter dem zweiten LED-Leuchtmittel angeordnet. Dementsprechend ist der sechste Widerstand in Stromflussrichtung vorzugsweise direkt hinter dem zweiten Widerstand angeordnet. Eine derartige Verschaltung ist erfindungsgemäß beliebig erweiterbar, sodass jeweils benachbarte LED-Leuchtmittel zusammen mit benachbarten Widerständen jeweils eine Messbrückenschaltung bilden. Dies hat den Vorteil, dass auch bei LED-Leuchtmittelreihenschaltungen mit einer Vielzahl von LED-Leuchtmitteln mit einfachen Mitteln sowie auf eine kostengünstige Art und Weise eine zuverlässige Überwachung der LED-Leuchtmittel gewährleistbar ist.

Besonders bevorzugt weist die LED-Leuchtvorrichtung ein drittes LED-Leuchtmittel und einen sechsten Widerstand auf, wobei das dritte LED-Leuchtmittel zusammen mit dem zweiten LED-Leuchtmittel, dem zweiten Widerstand und dem sechsten Widerstand einen Teil einer zweiten Messbrückenschaltung bildet, wobei die zweite Messbrückenschaltung mit der Signalverarbeitungsvorrichtung elektrisch gekoppelt ist. Das dritte LED-Leuchtmittel ist vorzugsweise in der LED-Leuchtmittelreihenschaltung direkt hinter dem zweiten LED-Leuchtmittel angeordnet. Dementsprechend ist der sechste Widerstand in Stromflussrichtung vorzugsweise direkt hinter dem zweiten Widerstand angeordnet. Zur Realisierung der zweiten Messbrückenschaltung weist die LED-Leuchtvorrichtung vorzugsweise weitere elektronische Bauteile, wie beispielsweise Transistoren, Widerstände oder dergleichen, auf. Vorzugsweise ist die zweite Messbrückenschaltung gemäß der ersten Messbrückenschaltung ausgebildet. Eine derartige Verschaltung ist erfindungsgemäß beliebig erweiterbar, sodass jeweils benachbarte LED-Leuchtmittel zusammen mit benachbarten Widerständen und den weiteren elektronischen Bauteilen, insbesondere Transistoren, Widerständen oder dergleichen, jeweils eine neue Messbrückenschaltung bilden. Die einzelnen Messbrückenschaltungen sind vorzugsweise allesamt mit der Signalverarbeitungsvorrichtung elektrisch gekoppelt. Auf diese Weise ist eine Verstimmung einer beliebigen Messbrückenschaltung von der Signalverarbeitungsvorrichtung detektierbar. Da ein Defekt eines LED-Leuchtmittels automatisch eine Verstimmung zweier benachbarter Messbrückenschaltungen bewirkt, ist das defekte LED-Leuchtmittel somit leicht identifizierbar. Dies ist insbesondere vorteilhaft, wenn mehrere LED-Leuchtmittel Defekte aufweisen. Eine derartige Verschaltung hat den Vorteil, dass auch bei LED-Leuchtmittelreihenschaltungen mit einer Vielzahl von LED-Leuchtmitteln mit einfachen Mitteln sowie auf eine kostengünstige Art und Weise eine zuverlässige Überwachung der LED-Leuchtmittel gewährleistbar ist.

Es ist bevorzugt, dass der erste Widerstand als viertes LED-Leuchtmittel und/oder der zweite Widerstand als fünftes LED-Leuchtmittel ausgebildet sind. Demnach weist die LED-Leuchtvorrichtung vorzugsweise zwei miteinander parallelgeschaltete LED-Leuchtmittelreihenschaltungen auf, welche zusammen die erste Messbrückenschaltung sowie etwaige weitere Messbrückenschaltungen bilden. Dies hat den Vorteil, dass die Herstellungskosten für die LED-Leuchtvorrichtung auf diese Weise weiter reduzierbar sind.

Gemäß einem zweiten Aspekt der Erfindung wird die Aufgabe durch ein Kraftfahrzeug mit einer LED-Leuchtvorrichtung gelöst. Erfindungsgemäß ist die LED-Leuchtvorrichtung als erfindungsgemäße LED-Leuchtvorrichtung ausgebildet.

Bei dem beschriebenen Kraftfahrzeug ergeben sich sämtliche Vorteile, die bereits zu einer LED-Leuchtvorrichtung gemäß dem ersten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise ein Defekt, insbesondere ein Kurzschluss, eines LED-Leuchtmittels der LED-Leuchtvorrichtung des Kraftfahrzeugs zuverlässig detektierbar ist. Mittels der Messbrückenschaltung bewirken bereits kleine Defekte, wie beispielsweise ein Kurzschluss eines LED-Leuchtmittels, eine große Verstimmung, welche mit relativ geringem Aufwand, insbesondere mittels einer Signalverarbeitungsvorrichtung, detektierbar ist. Eine teure Messelektronik ist somit entbehrlich. Ferner sind keine aufwendigen Zusatzleitungen zwischen den LED-Leuchtmitteln und der Treiberelektronik erforderlich. Überdies sind für die LED-Leuchtmittel keine separaten analogen Messkanäle an der Treiberelektronik vonnöten, sodass die Herstellungskosten der erfindungsgemäßen LED-Leuchtvorrichtung im Vergleich zu herkömmlichen LED-Leuchtvorrichtungen wesentlich geringer sind. Hierdurch sind Herstellungskosten des erfindungsgemäßen Kraftfahrzeugs gegenüber herkömmlichen Kraftfahrzeugen reduzierbar.

Anhand der beigefügten Zeichnungen wird die Erfindung nachfolgend näher erläutert. Dabei zeigt:
- Fig. 1: einen Schaltplan einer bevorzugten ersten Ausführungsform einer erfindungsgemäßen LED-Leuchtvorrichtung,
- Fig. 2: einen Schaltplan einer bevorzugten zweiten Ausführungsform einer erfindungsgemäßen LED-Leuchtvorrichtung,
- Fig. 3: einen Schaltplan einer bevorzugten dritten Ausführungsform einer erfindungsgemäßen LED-Leuchtvorrichtung, und
- Fig. 4: schematisch in einer Seitenansicht eine bevorzugte Ausführungsform eines erfindungsgemäßen Kraftfahrzeugs.

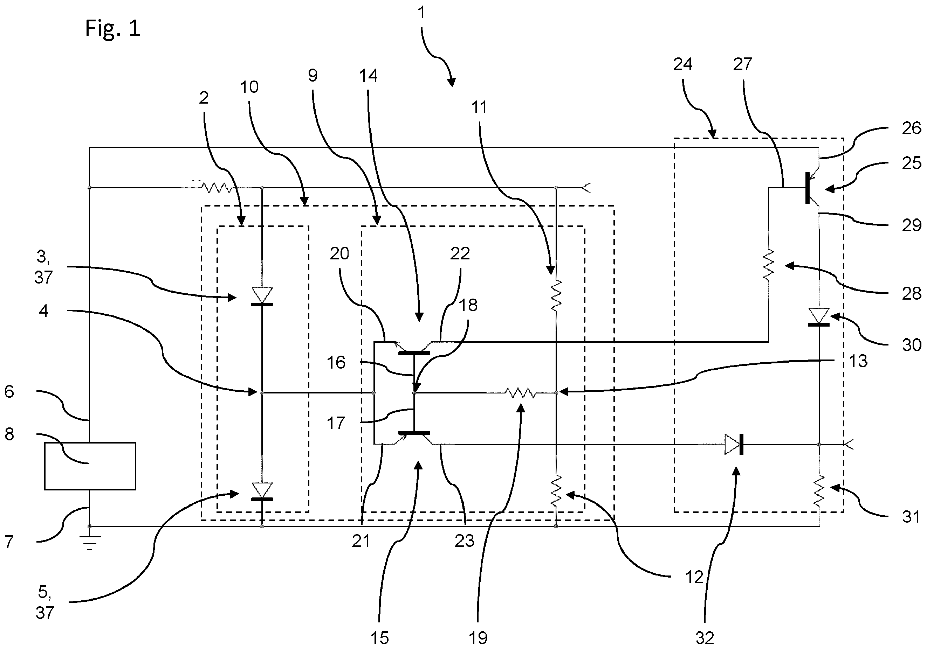

In Fig. 1 ist eine bevorzugte erste Ausführungsform einer erfindungsgemäßen LED-Leuchtvorrichtung 1 schematisch in einem Schaltplan abgebildet. Die LED-Leuchtvorrichtung 1 weist eine LED-Leuchtmittelreihenschaltung 2 mit einem als LED-Leuchtelement 37 ausgebildeten ersten LED-Leuchtmittel 3 und einem als LED-Leuchtelement 37 ausgebildeten zweiten LED-Leuchtmittel 5 auf. Das erste LED-Leuchtmittel 3 ist somit mit dem zweiten LED-Leuchtmittel 5 unter Ausbildung einer Leuchtmittelkoppelstelle 4 in Reihe geschaltet. Ferner weist die LED-Leuchtvorrichtung 1 eine Anode 6, eine Kathode 7 und eine Treiberelektronik 8 auf, wobei die Treiberelektronik 8 mit der Anode 6 und der Kathode 7 elektrisch gekoppelt ist. Anschlüsse der Treiberelektronik 8 für eine externe Stromquelle sind nicht dargestellt. Schließlich weist die LED-Leuchtvorrichtung 1 eine Detektionsvorrichtung zum Detektieren eines Defekts des ersten LED-Leuchtmittels 3 und/oder des zweiten LED-Leuchtmittels 5 auf. Die Detektionsvorrichtung 9 bildet zusammen mit dem ersten LED-Leuchtmittel 3 und dem zweiten LED-Leuchtmittel 5 eine erste Messbrückenschaltung 10. Schließlich weist die LED-Leuchtvorrichtung 1 eine Signalverarbeitungsvorrichtung 24 zum Auswerten einer Verstimmung der ersten Messbrückenschaltung 10 sowie zum Weiterleiten der Auswertung an die Treiberelektronik 8 auf.

Die Detektionsvorrichtung 9 weist einen ersten Widerstand 11 und einen zweiten Widerstand 12 auf, welche unter Ausbildung einer Widerstandkoppelstelle 13 miteinander in Reihe geschaltet sind. Der ersten Widerstand 11 ist mit der Anode 6 und der zweite Widerstand 12 mit der Kathode 7 elektrisch gekoppelt. Somit ist die Reihenschaltung aus dem ersten Widerstand 11 und dem zweiten Widerstand 12 zur LED-Leuchtmittelreihenschaltung parallelgeschaltet. Ferner weist die Detektionsvorrichtung 9 einen ersten Transistor 14 mit einer ersten Basis 16, einem ersten Emitter 20 sowie einem ersten Kollektor 22 und einen zweiten Transistor 15 mit einer zweiten Basis 17, einem zweiten Kollektor 23 sowie einem zweiten Emitter 21 auf. Die erste Basis 16 ist mit der zweiten Basis 17 unter Ausbildung einer Basiskoppelstelle 18 elektrisch gekoppelt, wobei die Basiskoppelstelle 18 über einen dritten Widerstand 19 mit der Widerstandkoppelstelle 19 elektrisch gekoppelt ist. Der erste Emitter 20 ist mit dem zweiten Emitter 21 sowie der Leuchtmittelkoppelstelle 4 elektrisch gekoppelt.

Die Signalverarbeitungsvorrichtung 24 weist einen dritten Transistor 25 mit einem dritten Emitter 26, einer dritten Basis 27 und einem dritten Emitter 29 auf. Ein dritter Widerstand 19 der Signalverarbeitungsvorrichtung 24 ist mit dem ersten Kollektor 22 sowie der dritten Basis 27 elektrisch gekoppelt. Der dritte Emitter 26 ist mit der Anode 6 elektrisch gekoppelt. Der dritte Kollektor 29 ist über eine erste Diode 30 und einen fünften Widerstand 31 mit der Kathode elektrisch gekoppelt. Der zweite Kollektor 23 ist über eine zweite Diode 32 mit einem Bereich zwischen der ersten Diode 30 und dem fünften Widerstand 31 elektrisch gekoppelt.

Im Folgenden soll das Verhalten der LED-Leuchtvorrichtung 1 im Falle eines Defekts eines LED-Leuchtmittels beschrieben werden. Wenn das erste LED-Leuchtmittel 3 eine Unterbrechung aufweist, steigt die Spannung der Reihenschaltung des ersten Widerstands 11 und des zweiten Widerstands 12 der Detektionsvorrichtung 9 an. Eine Spannung an der Leuchtmittelkoppelstelle 4, wobei eine Spannung an der Widerstandskoppelstelle 13 steigt, gleichwohl nicht im gleichen Maße wie der Spannungsabfall an der Leuchtmittelkoppelstelle 4. Eine Spannung zwischen der ersten Basis 16 und dem ersten Emitter 20 steigt ebenfalls an, wodurch der erste Transistor 14 elektrisch leitend wird. Demzufolge wird auch der dritte Transistor 25 über den vierten Widerstand 28 elektrisch leitend. Somit fällt eine detektierbare Spannung am fünften Widerstand 31 an, welche Aufschluss über den Fehlerzustand gibt.

Wenn das erste LED-Leuchtmittel 3 einen Kurzschluss aufweist, beträgt eine Spannung am ersten LED-Leuchtmittel auf etwas 0V. Zudem fällt die Spannung der Reihenschaltung des ersten Widerstands 11 und des zweiten Widerstands 12 der Detektionsvorrichtung 9 ab. Die Spannung an der Leuchtmittelkoppelstelle 4 liegt somit nahe der Spannung der Spannung der Reihenschaltung des ersten Widerstands 11 und des zweiten Widerstands 12. Die Spannung am der Widerstandskoppelstelle 13 beträgt demnach etwa die Hälfte der Spannung der Leuchtmittelkoppelstelle 4. Hierdurch wird ein Anstieg eines Betrags einer negativen Spannung zwischen der zweiten Basis 17 und dem zweiten Emitter 21 bewirkt, sodass der zweite Transistor 15 leitend wird. Über die zweite Diode 32 wird eine Spannung zum fünften Widerstand 31 zugeführt. Somit fällt eine detektierbare Spannung am fünften Widerstand 31 an, welche Aufschluss über den Fehlerzustand gibt.

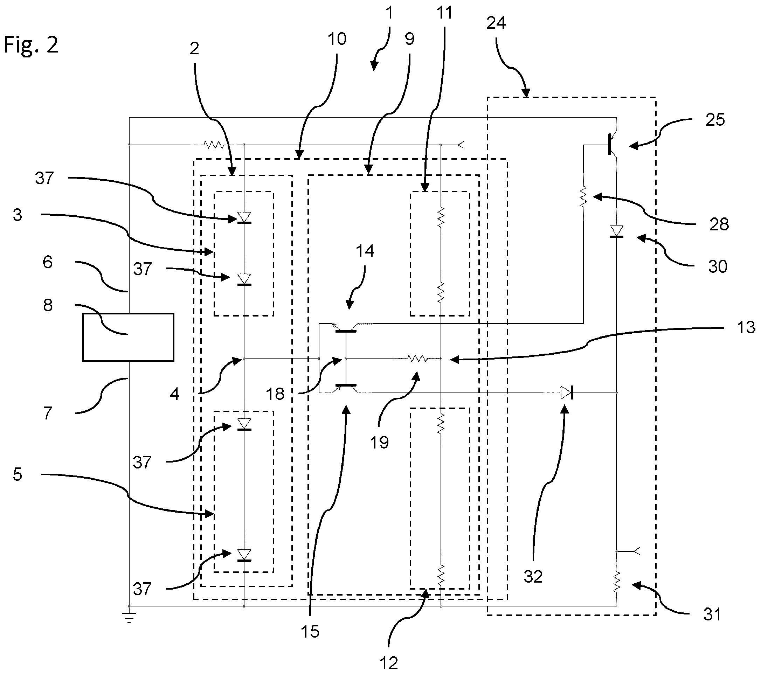

In Fig. 2 ist eine bevorzugte zweite Ausführungsform einer erfindungsgemäßen LED-Leuchtvorrichtung 1 schematisch in einem Schaltplan abgebildet. Die zweite Ausführungsform unterscheidet sich von der ersten Ausführungsform darin, dass das erste LED-Leuchtmittel 3 und das zweite LED-Leuchtmittel 5 jeweils zwei in Reihe geschaltete LED-Leuchtelemente 37 aufweisen. Zudem weisen der erste Widerstand 11 und der zweite Widerstand 12 jeweils zwei in Reihe geschaltete Einzelwiderstände auf.

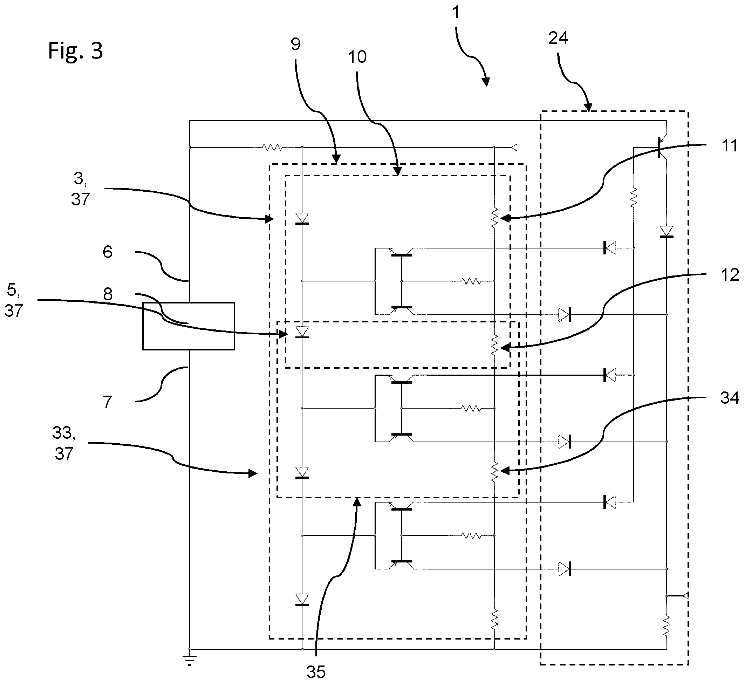

In Fig. 3 ist eine bevorzugte dritte Ausführungsform einer erfindungsgemäßen LED-Leuchtvorrichtung 1 schematisch in einem Schaltplan abgebildet. Bei der dritten Ausführungsform weist die LED-Leuchtmittelreihenschaltung 2 zwei weitere LED-Leuchtmittel, wie beispielsweise ein drittes LED-Leuchtmittel, auf. Zudem ist die Detektionsvorrichtung 9 derart ausgebildet, dass das zweite LED-Leuchtmittel 5 und das dritte LED-Leuchtmittel 33 zusammen mit der Detektionsvorrichtung 9 bzw. einem Teil der Detektionsvorrichtung 9 eine zweite Messbrückenschaltung 35 bilden, wobei die zweite Messbrückenschaltung 35 vom technischen Aufbau her der ersten Messbrückenschaltung 10 entspricht oder zumindest im Wesentlichen entspricht. Die zweite Messbrückenschaltung 35 ist ebenfalls mit der Signalverarbeitungsvorrichtung 24 gemäß der ersten Messbrückenschaltung 10 elektrisch gekoppelt.

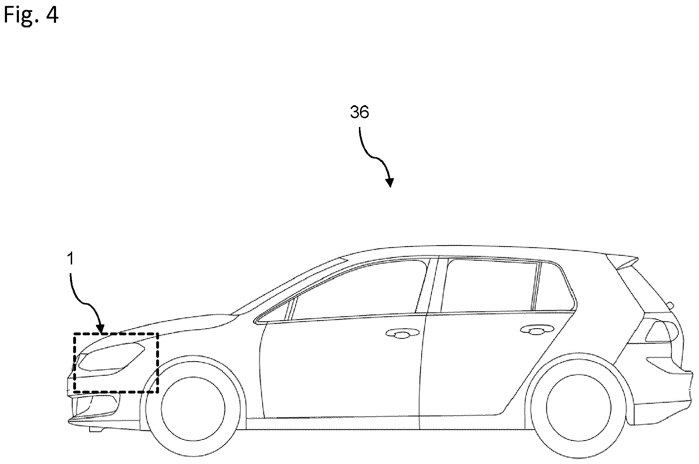

Fig. 4 zeigt eine bevorzugte Ausführungsform eines erfindungsgemäßen Kraftfahrzeugs 36 schematisch in einer Seitenansicht. Das Kraftfahrzeug 36 weist eine erfindungsgemäße LED-Leuchtvorrichtung 1 auf.

### Bezugszeichenliste

- 1: LED-Leuchtvorrichtung
- 2: LED-Leuchtmittelreihenschaltung
- 3: erstes LED-Leuchtmittel
- 4: Leuchtmittelkoppelstelle
- 5: zweites LED-Leuchtmittel
- 6: Anode
- 7: Kathode
- 8: Treiberelektronik
- 9: Detektionsvorrichtung
- 10: erste Messbrückenschaltung
- 11: erster Widerstand
- 12: zweiter Widerstand
- 13: Widerstandkoppelstelle
- 14: erster Transistor
- 15: zweiter Transistor
- 16: erste Basis
- 17: zweite Basis
- 18: Basiskoppelstelle
- 19: dritter Widerstand
- 20: erster Emitter
- 21: zweiter Emitter
- 22: erster Kollektor
- 23: zweiter Kollektor
- 24: Signalverarbeitungsvorrichtung
- 25: dritter Transistor
- 26: dritter Emitter
- 27: dritte Basis
- 28: vierter Widerstand
- 29: dritter Kollektor
- 30: erste Diode
- 31: fünfter Widerstand
- 32: zweite Diode
- 33: drittes LED-Leuchtmittel
- 34: Sechster Widerstand
- 35: zweite Messbrückenschaltung
- 36: Kraftfahrzeug
- 37: LED-Leuchtelement

## Patentansprüche

1. LED-Leuchtvorrichtung (1) aufweisend eine LED-Leuchtmittelreihenschaltung (2) mit einem ersten LED-Leuchtmittel (3) und einem mit dem ersten LED-Leuchtmittel (3) über eine Leuchtmittelkoppelstelle (4) gekoppelten zweiten LED-Leuchtmittel (5), eine Anode (6), eine Kathode (7), eine Treiberelektronik (8) zum Verbinden mit der Anode (6) und der Kathode (7) zum Betreiben der LED-Leuchtmittelreihenschaltung (2) und eine Detektionsvorrichtung (9) zum Detektieren eines Defekts des ersten LED-Leuchtmittels (3) und des zweiten LED-Leuchtmittels (5), wobei
die Detektionsvorrichtung (9) zusammen mit dem ersten LED-Leuchtmittel (3) und dem zweiten LED-Leuchtmittel (5) eine erste Messbrückenschaltung (10) bildet, wobei die Detektionsvorrichtung (9) einen ersten Widerstand (11) und einen zweiten Widerstand (12) aufweist,
**dadurch gekennzeichnet, dass**
der erste Widerstand (11) und der zweite Widerstand (12) miteinander in Reihe geschaltet sind und zwischen sich eine gemeinsame Widerstandkoppelstelle (13) ausbilden, wobei der erste Widerstand (11) und der zweite Widerstand (12) denselben ohmschen Widerstand aufweisen, wobei die Detektionsvorrichtung (9) einen ersten Transistor (14) und einen zweiten Transistor (15) aufweist, wobei eine erste Basis (16) des ersten Transistors (14) und eine zweite Basis (17) des zweiten Transistors (15) eine gemeinsame Basiskoppelstelle (18) bilden, und wobei die Basiskoppelstelle (18) über einen dritten Widerstand (19) mit der Widerstandkoppelstelle (13) elektrisch gekoppelt ist.

2. LED-Leuchtvorrichtung (1) nach Anspruch 1,
**dadurch gekennzeichnet, dass**
ein erster Emitter (20) des ersten Transistors (14) mit einem zweiten Emitter (21) des zweiten Transistors (15) und der Leuchtmittelkoppelstelle (4) elektrisch gekoppelt ist.

3. LED-Leuchtvorrichtung (1) nach Anspruch 2,
**dadurch gekennzeichnet, dass**
ein erster Kollektor (22) des erstens Transistors (14) und ein zweiter Kollektor (23) des zweiten Transistors (15) mit einer Signalverarbeitungsvorrichtung (24) der LED-Leuchtvorrichtung (1) elektrisch gekoppelt sind.

4. LED-Leuchtvorrichtung (1) nach Anspruch 3,
**dadurch gekennzeichnet, dass**
die Signalverarbeitungsvorrichtung (24) einen dritten Transistor (25) aufweist, wobei ein dritter Emitter (26) des dritten Transistors (25) mit der Anode (6) elektrisch gekoppelt ist, wobei eine dritte Basis (27) des dritten Transistors (25) über einen vierten Widerstand (28) mit dem ersten Kollektor (22) elektrisch gekoppelt ist, wobei ein dritter Kollektor (29) des dritten Transistors (25) über eine erste Diode (30) und einen fünften Widerstand (31) mit der Kathode (7) elektrisch gekoppelt ist, und wobei der zweite Kollektor (23) über eine zweite Diode (32) mit einem Bereich zwischen der ersten Diode (30) und dem fünften Widerstand (31) elektrisch gekoppelt ist.

5. LED-Leuchtvorrichtung (1) nach Anspruch 3 oder 4,
**dadurch gekennzeichnet, dass**
die Treiberelektronik (8) ausgebildet ist, einen Betriebszustand der LED-Leuchtmittelreihenschaltung (2) in Abhängigkeit eines von der Signalverarbeitungsvorrichtung (24) ausgewerteten Signals zu steuern.

6. LED-Leuchtvorrichtung (1) nach einem der vorangegangenen Ansprüche,
**dadurch gekennzeichnet, dass**
die LED-Leuchtvorrichtung (1) ein drittes LED-Leuchtmittel (33) und einen sechsten Widerstand (34) aufweist, wobei das dritte LED-Leuchtmittel (33) zusammen mit dem zweiten LED-Leuchtmittel (5), dem zweiten Widerstand (12) und dem sechsten Widerstand (34) eine zweite Messbrückenschaltung (35) bildet.

7. LED-Leuchtvorrichtung (1) nach einem der Ansprüche 3 bis 5,
**dadurch gekennzeichnet, dass**
die LED-Leuchtvorrichtung (1) ein drittes LED-Leuchtmittel (33) und einen sechsten Widerstand (34) aufweist, wobei das dritte LED-Leuchtmittel (33) zusammen mit dem zweiten LED-Leuchtmittel (5), dem zweiten Widerstand (12) und dem sechsten Widerstand (34) einen Teil einer zweiten Messbrückenschaltung (35) bildet, wobei die zweite Messbrückenschaltung (35) mit der Signalverarbeitungsvorrichtung (24) elektrisch gekoppelt ist.

8. LED-Leuchtvorrichtung (1) nach einem der vorangegangenen Ansprüche,
**dadurch gekennzeichnet, dass**
der erste Widerstand (11) als viertes LED-Leuchtmittel und/oder der zweite Widerstand (12) als fünftes LED-Leuchtmittel ausgebildet sind.

9. Kraftfahrzeug (36), aufweisend eine LED-Leuchtvorrichtung (1),
**dadurch gekennzeichnet, dass**
die LED-Leuchtvorrichtung (1) nach einem der vorangegangenen Ansprüche ausgebildet ist.

## Claims

1. LED lighting device (1) featuring an LED light source series connection (2) with a first LED light source (3) and a second LED light source (5) coupled to the first LED light source (3) through a light source coupling point (4), an anode (6), a cathode (7), driver electronics (8) for connecting to the anode (6) and the cathode (7) for operating the LED light source series connection (2) and a detection device (9) for detecting a fault in the first LED light source (3) and in the second LED light source (5),
where
the detection device (9) forms, together with the first LED light source (3) and the second LED light source (5), a first measuring bridge circuit (10), where the detection device (9) features a first resistor (11) and a second resistor (12),
**characterized in that**
the first resistor (11) and the second resistor (12) are series-connected to each other and form between themselves a shared resistor double point (13), where the first resistor (11) and the second resistor (12) feature the same ohmic resistance, where the detection device (9) features a first transistor (14) and a second transistor (15), where a first base (16) of the first transistor (14) and a second base (17) of the second transistor (15) form a shared base coupling point (18), and where the base coupling point (18) is electrically coupled to the resistor coupling point (13) through a third resistor (19).

2. LED lighting device (1) in accordance with Claim 1,
**characterized in that**
a first emitter (20) of the first transistor (14) is electrically coupled to a second emitter (21) of the second transistor (15) and the light source coupling point (4).

3. LED lighting device (1) in accordance with Claim 2,
**characterized in that**
a first collector (22) of the first transistor (14) and a second collector (23) of the second transistor (15) are electrically coupled to a signal processing device (24) of the LED lighting device (1).

4. LED lighting device (1) in accordance with Claim 3,
**characterized in that**
the signal processing device (24) features a third transistor (25), where a third emitter (26) of the third transistor (25) is electrically coupled to the anode (6), where a third base (27) of the third transistor (25) is electrically coupled to the first collector (22) through a fourth resistor (28), where a third collector (29) of the third transistor (25) is electrically coupled to the cathode (7) through a first diode (30) and a fifth resistor (31), and where the second collector (23) is electrically coupled with an area between the first diode (30) and the fifth resistor (31) through a second diode (32).

5. LED lighting device (1) in accordance with Claim 3 or 4,
**characterized in that**
the driver electronics (8) is fashioned to control an operating state of the LED light source series connection (2) depending on a signal evaluated by the signal processing device (24).

6. LED lighting device (1) in accordance with one of the previous claims,
**characterized in that**
the LED lighting device (1) features a third LED lighting device (33) and a sixth resistor (34), where the third LED lighting device (33) forms, together with the second LED lighting device (5), the second resistor (12) and the sixth resistor (34), a second measuring bridge circuit (35).

7. LED lighting device (1) in accordance with one of Claims 3 through 5,
**characterized in that**
the LED lighting device (1) features a third LED lighting device (33) and a sixth resistor (34), where the third LED lighting device (33) forms, together with the second LED lighting device (5), the second resistor (12) and the sixth resistor (34), one part of a second measuring bridge circuit (35), where the second measuring bridge circuit (35) is electrically coupled to the signal processing device (24).

8. LED lighting device (1) in accordance with one of the previous claims,
**characterized in that**
the first resistor (11) is fashioned as a fourth LED light source and/or the second resistor (12) is fashioned as a fifth LED light source.

9. Motor vehicle (36), featuring an LED lighting device (1),
**characterized in that**
the LED lighting device (1) is fashioned in accordance with one of the previous claims.

## Revendications

1. Dispositif lumineux (1) comprenant un circuit sériel d'ampoules LED (2) avec une première ampoule LED (3) et une deuxième ampoule LED (5) couplée avec la première ampoule LED (3) à l'aide d'un un point de couplage d'ampoule (4), une anode (6), une cathode (7), une électronique du pilote (8) pour raccorder avec l'anode (6) et la cathode (7) pour faire fonctionner le circuit sériel d'ampoules LED (2) et un dispositif de détection (9) pour détecter un défaut de la première ampoule LED (3) et de la deuxième ampoule LED (5),
où
le dispositif de détection (9) forme, avec la première ampoule LED (3) et la deuxième ampoule LED (5), un premier circuit en pont de mesure (10), le dispositif de détection (9) comprenant une première résistance (11) et une deuxième résistance (12)
**caractérisé en ce que**
la première résistance (11) et la deuxième résistance (12) sont connectées en série l'une avec l'autre et forment entre elles un doublet de résistance commun (13), la première résistance (11) et la deuxième résistance (12) ayant la même résistance ohmique, le dispositif de détection (9) comprenant un premier transistor (14) et un deuxième transistor (15), dans lequel une première base (16) du premier transistor (14) et une deuxième base (17) du deuxième transistor (15) forment un point de couplage de base commun (18), et dans lequel le point de couplage de base (18) est couplé électriquement au point de couplage de résistance (13) via une troisième résistance (19).

2. Dispositif lumineux à LED (1) selon la revendication 1,
**caractérisé en ce que**
un premier émetteur (20) du premier transistor (14) est couplé électriquement à un deuxième émetteur (21) du deuxième transistor (15) et au point de couplage de l'ampoule (4).

3. Dispositif lumineux à LED (1) selon la revendication 2,
**caractérisé en ce que**
un premier collecteur (22) du premier transistor (14) et un deuxième collecteur (23) du deuxième transistor (15) sont couplés électriquement à un dispositif de traitement des signaux (24) du dispositif lumineux LED (1).

4. Dispositif lumineux à LED (1) selon la revendication 3,
**caractérisé en ce que**
le dispositif de traitement de signaux (24) comprend un troisième transistor (25), un troisième émetteur (26) du troisième transistor (25) étant couplé électriquement à l'anode (6), une troisième base (27) du troisième transistor (25) étant couplée électriquement au premier collecteur (22) via une quatrième résistance (28), dans lequel un troisième collecteur (29) du troisième transistor (25) est couplé électriquement à la cathode (7) par l'intermédiaire d'une première diode (30) et d'une cinquième résistance (31), et dans lequel le deuxième collecteur (23) est couplé électriquement à une zone située entre la première diode (30) et la cinquième résistance (31) par l'intermédiaire d'une deuxième diode (32).

5. Dispositif lumineux à LED (1) selon la revendication 3 ou 4,
**caractérisé en ce que**
l'électronique de commande (8) est conçue pour commander un état de fonctionnement du circuit sériel d'ampoules LED (2) en fonction d'un signal évalué par le dispositif de traitement de signaux (24).

6. Dispositif lumineux à LED (1) selon l'une des revendications précédentes,
**caractérisé en ce que**
le dispositif lumineux à LED (1) compte une troisième ampoule LED (33) et une sixième résistance (34), la troisième ampoule LED (33) formant, avec la deuxième ampoule LED (5), la deuxième résistance (12) et la sixième résistance (34), un deuxième circuit en pont de mesure (35).

7. Dispositif lumineux à LED (1) selon l'une des revendications 3 à 5,
**caractérisé en ce que**
le dispositif lumineux à LED (1) compte une troisième ampoule LED (33) et une sixième résistance (34), la troisième ampoule LED (33) faisant partie, avec la deuxième ampoule LED (5), la deuxième résistance (12) et la sixième résistance (34), d'un deuxième circuit en pont de mesure (35), ce dernier (35) étant couplé électriquement au dispositif de traitement de signaux (24).

8. Dispositif lumineux à LED (1) selon l'une des revendications précédentes,
**caractérisé en ce que**
la première résistance (11) est formée comme quatrième ampoule LED et/ou la deuxième résistance (12) est formée comme cinquième ampoule LED.

9. Véhicule automobile (36) comprenant un dispositif d'éclairage à LED (1),
**caractérisé en ce que**
le dispositif lumineux à LED (1) est formé selon l'une des revendications précédentes.
